# EUROPÄISCHE PATENTANMELDUNG

(11) **EP 0 767 549 A2**
(43) Veröffentlichungstag der Anmeldung: **09.04.1997**
(21) Anmeldenummer: 96440076.6
(22) Anmeldetag: 30.09.1996
(51) Int. Cl.: H04B 7/26

(54) **Breitbandiges Mobilfunksystem**

(30) Priorität: 05.10.1995 DE 19537044
(71) Anmelder: ALCATEL ALSTHOM COMPAGNIE GENERALE D'ELECTRICITE, 75008 Paris (FR)
(72) Erfinder: Frank, Matthias, 14822 Borkheide (DE)
(74) Vertreter: Knecht, Ulrich Karl, Dipl.-Ing.

(57) **Zusammenfassung**

Es werden ein Mobilfunksystem und Mittel dafür vorgeschlagen, um eine breitbandige Funkübertragung zu ermöglichen, bei welcher einer Mobilstation (MS) mehrere und unterschiedlich breite Teilnehmerkanäle (TCH) zugeteilt werden können.

Dazu sind an die Funkfeststationen (BS, BS') des Mobilfunksystems und an die Mobilstation (MS) Konzentratoren (MSX) angeschlossen, die im asynchronen Transfermodus arbeiten, um mehrere Teilnehmerkanäle (TCH) durch statistisches Zeitmultiplexen zu einem Sendekanal (DL) zusammenzufassen und um einen Empfangskanal (UL) durch statistisches Demultiplexen in die mehreren Teilnehmerkanäle (TCH) aufzuteilen. Dadurch wird eine breitbandige drahtlose Funkverbindung zwischen Mobilstationen und den Funkfeststationen bereitgestellt, die sich durch eine flexible Anzahl von Teilnehmerkanälen, die unterschiedlich breit sein können, auszeichnet.

Gemäß einer Ausgestaltung des erfindungsgemäßen Mobilfunksystems arbeiten die Funkfeststationen (BS, BS') im Gleichkanalbetrieb und sind über gerichtete Funkstrecken (P, P') mit der Mobilstation (MS) verbindbar. Durch diese Kombination aus Gleichwellenfunk, Richtfunk und ATM-Übertragung ist ein vorteilhafter Einsatz der Erfindung im Bereich Bahnmobilfunk möglich.

## Beschreibung

Die Erfindung betrifft ein Mobilfunksystem nach dem Oberbegriff des Anspruchs 1 sowie eine Funkfeststation und eine Mobilstation dafür.

In bekannten Mobilfunksystemen, wie etwa dem GSM (Global System for Mobile Communication), ist jeder Mobilstation nur ein Teilnehmer zugewiesen. Somit kann dort nur jeweils ein einzelner Teilnehmer eine Mobilstation benutzen. Weiterhin sind im GSM für die Teilnehmerkanäle einheitliche Bandbreiten festgelegt (siehe hierzu etwa Seiten 195-203 in dem Buch "The GSM" von M. Mouly und M.-B. Pautet, erschienen 1992 im Eigenverlag, 49 rue Louise Bruneau, Palaiseau, Frankreich). Demnach wird pro Teilnehmerkanal eine Bandbreite entweder von 25 kHz im sogenannten Full Rate Modus (mit 8 TDMA-Kanälen in einem 200 kHz Band) oder von 12,5 kHz im sogenannten Half Rate Modus (mit 16 TDMA-Kanälen) bereitgestellt.

Aus DE-OS 42 22 237 ist ein Mobilfunksystem für eine linienförmige Funkversorgung entlang eines Versorgungsweges, insbesondere entlang einer Eisenbahnstrecke, beschrieben. Bei dem dortigen für viele Teilnehmer ausgelegten Mobilfunksystem ist eine in einem Zug installierte Mobilstation über eine gerichtete Funkstrecke mit den Funkfeststationen verbindbar, die entlang der Eisenbahnstrecke angordnet sind. Das dortige Mobilfunksystem ist zellular aufgebaut, wodurch für jeweils benachbarte Funkfeststationen verschiedene Trägerfrequenzen bereitgestellt werden müssen und somit eine aufwendige Funknetzplanung erforderlich ist. Weiterhin ist in dem Mobilfunksystem, das vorzugsweise nach dem GSM-Standard ausgelegt sein soll, jeder dortigen Mobilstation nur ein einzelner Teilnehmerkanal (TDMA-Zeitschlitz) zugeteilt. Wie mehrere Teilnehmerkanäle gleichzeitig für die Fahrgäste im Zug und für eine Funkzugbeeinflussung einfach bereitgestellt werden können, wird im DE-OS 42 22 237 nicht beschrieben.

Aufgabe der Erfindung ist es ein Mobilfunksystem der eingangs beschriebenen Art mit solchen Mitteln vorzuschlagen, die eine breitbandige Funkübertragung ermöglichen, bei welcher der Mobilstation mehrere und unterschiedlich breite Teilnehmerkanäle zugeteilt werden können.

Gelöst wird die Aufgabe durch ein Mobilfunksystem nach Anspruch 1 und durch eine Mobilstation sowie durch eine Funkfeststation nach einem der nebengeordneten Ansprüche.

Demnach senden und empfangen die Funkfeststationen des Mobilfunksystems über Funkstrecken zu bzw. von der Mobilstation, wobei an die Funkfeststationen und an die Mobilstation Konzentratoren angeschlossen sind, die im asynchronen Transfermodus arbeiten, um mehrere Teilnehmerkanäle durch statistisches Zeitmultiplexen zu einem Sendekanal zusammenzufassen und um einen Empfangskanal durch statistisches Demultiplexen in die mehreren Teilnehmerkanäle aufzuteilen.

Somit wird in dem erfindungsgemäßen Mobilfunksystem aufgrund der vorgeschlagenen ATM-Übertragung (ATM: Asynchroner Transfermodus) eine breitbandige drahtlose Funkverbindung zwischen Mobilstation und den Funkfeststationen bereitgestellt, die sich durch eine flexible Anzahl von Teilnehmerkanälen, die unterschiedlich breit sein können, auszeichnet.

Das erfindungsgemäße Mobilfunksystem ist besonders vorteilhaft für einen leistungsfähigen Bahnmobilfunk einsetzbar, insbesondere dann, wenn gemäß einer Ausgestaltung der Erfindung die ATM-Übertragung mit Richtfunk und Gleichwellenfunk kombiniert wird. Diese und weitere vorteilhafte Ausgestaltungen sind den Unteransprüchen zu entnehmen.

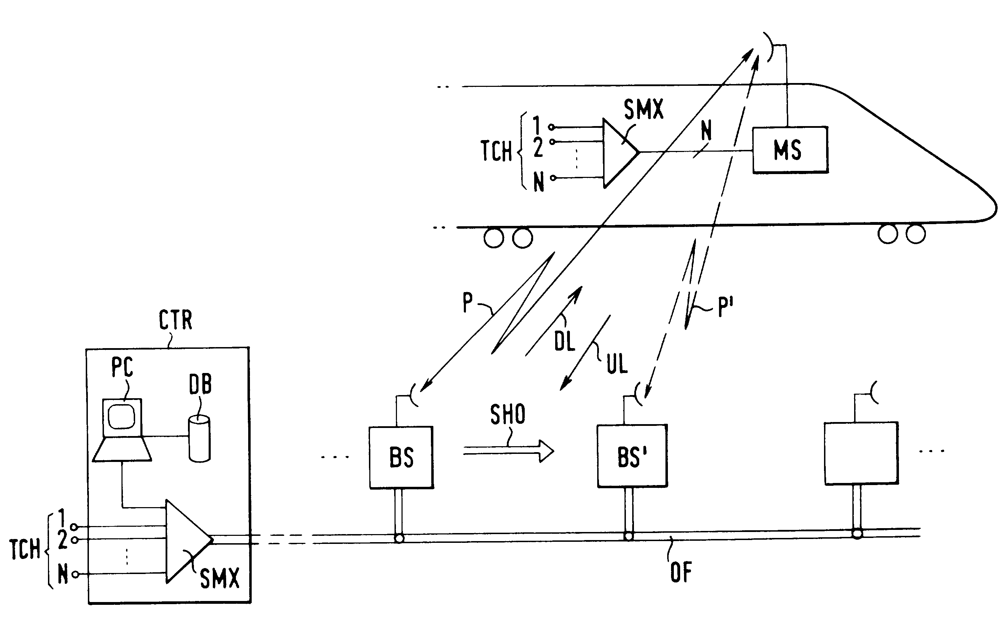

Im weiteren wird die Erfindung anhand eines Ausführungsbeispiels beschrieben, das schematisch in einer einzigen Figur dargestellt ist. Diese Figur zeigt eine Ausgestaltung der Erfindung als breitbandiges Bahnmobilfunksystem.

Die Figur zeigt ein Mobilfunksystem mit Funkfeststationen, von denen zwei zueinander benachbarte mit BS, BS' bezeichnet sind und die entlang eines Verkehrsweges angeordnet sind. Die Funkfeststationen sind über einen Lichtwellenleiter OF mit einer Zentrale CRT verbunden. Diese enthält einen mit dem Lichtwellenleiter verbundenen Konzentrator SMX, einen daran angeschlossenen Steuerrechner PC und eine damit verbundene Datenbank DB. Der Konzentrator SMX faßt zum Senden von Signalen in Abwärtsrichtung Teilnehmerkanäle 1, 2 bis N, die aus einem nicht dargestellten Fernsprechnetz kommen, zu einem Sendekanal DL zusammen. Die Signale werden dann über den Lichtwellenleiter OF zu der sendenden Funkfeststation BS geführt. Die Zusammenfassung der Teilnehmerkanäle erfolgt durch statistisches Zeitmultiplexen im asynchronen Transfermodus ATM. Ebenso wird in dem Konzentrator SMX zum Empfang von Signalen in Aufwärtsrichtung ein Empfangskanal UL durch statistisches Demultiplexen im ATM in die mehreren Teilnehmerkanäle TCH aufgeteilt. Das ATM-Übertragungsverfahren ist an sich aus der leitungsgebundenen Übertragung bekannt und etwa in dem Artikel "Synchrone Digitalhierarchie und asynchroner Transfermodus" von 0. Fundneider in der von der Siemens AG, München veröffentlichten Zeitschrift "Telekom Praxis", 4/1994, auf den Seiten 29 - 36 beschrieben. Der Konzentrator SMX innerhalb der Zentrale CTR verbindet auch den Steuerrechner PC über Steuerkanäle mit den Funkfeststationen BS und BS', um ein später beschriebenes Weiterreichen SHO von Funkverbindungen zu steuern.

Die Figur zeigt weiterhin ein Schienenfahrzeug, das sich entlang der nicht dargestellten Verkehrsstrecke bewegt. Das Schienenfahrzeug, im weiteren kurz Zug genannt, enthält eine Mobilstation MS, an die ein Konzentrator SMX angeschlossen ist. Dieser Konzentrator SMX faßt ebenfalls im ATM mittels statistischem Zeitmultiplexen mehrere Teilnehmerkanäle 1, 2 bis N zu einem Sendekanal zusammen und teilt mittels statistischem Demultiplexen einen Empfangskanal in die mehreren Teilnehmerkanäle auf.

Sowohl der Konzentrator im Zug als auch der Konzentrator in der Zentrale arbeiten im Basisband. Die konzentrierten Basisbandsignale werden im Sendeempfänger der Mobilstation bzw. im Sendeempfänger der jeweiligen Funkfeststation in die HF-Lage gesetzt und zur Gegenstation gesendet. Gleiches gilt für die Empfangsrichtung. Die Mobilstation MS ist über eine Richtantenne drahtlos mit einer der Funkfeststationen BS verbunden. Auch die Funkfeststation hat eine Richtfunkantenne zur Funkübertragung. Somit ist die Funkübertragung breitbandig ausführbar. In diesem Beispiel wird in Senderichtung von den Funkfeststationen zu der Mobilstation MS eine Trägerfrequenz von 1,5 GHz mit einer Bandbreite von 100 MHz verwendet. In Empfangsrichtung von der Mobilstation MS zu einer der Funkfeststationen wird eine Trägerfrequenz von 2 GHz mit der gleichen Bandbreite von 100 MHz verwendet. Als Modulationsverfahren wird QAM (Quadratur-Amplituden-Modulation) verwendet.

Alle Funkfeststationen arbeiten auf denselben Trägerfrequenzen, d. h. im Gleichkanalbetrieb. Eine aufwendige Funkzellenplanung und ein zeitaufwendiges Weiterreichen-Verfahren, wie von zellularen Mobilfunksystemen her bekannt, ist hier nicht erforderlich. So entfällt hier etwa eine Überwachung der Empfangsverhältnisse an den Funkfeststationen, die üblicherweise für eine anschließende Auswahl derjenigen Funkfeststation benötigt wird, an die die Funkverbindung weiterzureichen ist. Die Richtantennen der Funkfeststationen zeigen in Fahrtrichtung des Zuges. Die Richtantenne der Mobilstation zeigt entgegen der Fahrtrichtung. Somit verlängert sich die Funkstrecke P zwischen der Mobilstation MS und der damit verbundenen Funkfeststation BS während der Fahrt des Zuges. Zum Weiterreichen der Funkverbindung von der einen Funkfeststation BS zur nächsten BS' wird nun folgendes Verfahren vorgeschlagen:

Die Zentralstation CTR überwacht mittels des Steuerrechners PC die momentan auf der Funkstrecke P hergestellte Funkverbindung zwischen der Mobilstation MS und der Funkfeststation BS. Anhand der für die Funkstrecke P benötigten Signallaufzeit, stellt der Steuerrechner PC fest, daß der Zug sich von der Funkfeststation BS wegbewegt hat und sich jetzt in unmittelbarer Nähe zur nächsten Funkfeststation BS' befindet. In diesem Fall schaltet der Steuerrechner PC den Empfänger der nächsten Funkfeststation BS' ein, um Empfangssignale auf der nächsten Funkstrecke P' zu überwachen.

Wird nach diesem Einschalten der nächsten Funkfeststation BS' ein Empfang eines Funksignales über die Funkstrecke P' festgestellt, so versucht der Empfänger dieses empfangene Funksignal zu demodulieren. Dazu benötigt der Empfänger eine Mindestzeitdauer zur Aufsynchronisierung des Empfängers auf das empfangene Signal. Während dieser Mindestzeitdauer sind beide Funkfeststationen eingeschaltet. Ist das Empfangssignal aufsynchronisiert, so wird auch der Sender der nächsten Funkfeststation BS' eingeschaltet und die Funkverbindung auf der Funkstrecke P' vollständig aufgebaut. Danach und sobald auch die Aufsynchronisierung innerhalb der Mobilstation MS erfolgt ist, wird durch Signalisierung des Steuerrechners PC an die Funkfeststation BS diese abgeschaltet.

Auf diese Weise wird die Funkverbindung von der Funkstrecke P auf die nächste Funkstrecke P' weitergereicht. Eine abrupte Unterbrechung der Funkverbindung ist nicht möglich, da beide Funkstrecken für die Mindestzeitdauer, die zur Aufsynchronisierung benötigt wird, gleichzeitig und auf derselben Frequenz benutzt werden. Das Weiterreichen SHO der Funkverbindung von der einen Funkfeststation BS zur nächsten BS' kann somit als weiches Weiterreichen ("soft hand off") bezeichnet werden.

Die Steuerung des Weiterreichens innerhalb der Zentrale CTR erfolgt durch Überwachung und Auswertung der Basisbandsignale in den Teilnehmerkanälen und/oder in den Signalisierungskanälen. Das Weiterreichen SHO kann somit durch Auswertung digitaler Basisbandsignale etwa mit Hilfe eines sogenannten soft decision equalizers erfolgen. Die Feststellung, daß der Zug in die Nähe der nächsten Funkfeststation gelangt ist, kann nicht nur durch die Überwachung der Funksignallaufzeit erfolgen, sondern etwa auch durch die Überwachung des Empfangspegels oder der Empfangsqualität an der Funkfeststation BS'.

Weiterhin verfügt die Zentrale über eine Datenbank DB, in der Daten zum Fahrplan des Zuges abgespeichert sind. Diese Daten können ebenfalls zur Feststellung benutzt werden, ob der Zug die nächste Funkfeststation erreicht hat (Standortbestimmung).

Das oben beschriebene Mobilfunksystem kann auch erweitert werden auf ein Mehrträgerfunksystem, um bei Ausfall oder Störung der Funkübertragung auf einer Trägerfrequenz auf eine andere Trägerfrequenz umschalten zu können. Ein solches System ist auch geeignet zur zwei- oder mehrfachen Einrichtung von Signalisierungskanälen, um Redundanz für eine sichere Funkzugbeeinflussung bereitzustellen.

Die Beschreibung der Erfindung anhand des obigen Auführungsbeispiels, soll nicht als Beschränkung der Erfindung auf das Anwendungsgebiet "Bahnmobilfunk" verstanden werden. Es sind auch Ausführungen der Erfindung denkbar, bei denen mittels Sektorantennen nicht-linienförmige Funkgebiete versorgt werden. Sind solche Funkgebiete sehr klein, wie z. B. Büroflächen, kann auch auf eine gerichtete Funkübertragung mittels Sektorantennen verzichtet werden, da hier nur kurze Funkstrecken zu überbrücken sind. Weiterhin sind Ausführungen denkbar, bei denen z. B. eine breitbandige Funkübertragung für Luftfahrzeuge bereitgestellt werden soll im Rahmen eines satellitengestützten und/oder terrestrisch gestützten Funknetzes.

## Patentansprüche

1. Mobilfunksystem mit Funkfeststationen (BS, BS') und mit einer Mobilfunkstation (MS), die über eine Funkstrecke (P) mit einer der Funkfeststationen (BS) verbunden ist,
**dadurch gekennzeichnet,** daß an die Funkfeststationen (BS, BS') und an die Mobilstation (MS) Konzentratoren (SMX) angeschlossen sind, die im asynchronen Transfermodus arbeiten, um mehrere Teilnehmerkanäle (TCH) durch statistisches Zeitmultiplexen zu einem Sendekanal (DL) zusammenzufassen und um einen Empfangskanal (UL) durch statistisches Demultiplexen in die mehreren Teilnehmerkanäle (TCH) aufzuteilen.

2. Mobilfunksystem nach Anspruch 1,
dadurch gekennzeichnet, daß die Funkfeststationen (BS, BS') im Gleichkanalbetrieb senden und empfangen.

3. Mobilfunksystem nach Anspruch 2,
dadurch gekennzeichnet, daß an die Funkfeststationen (BS, BS') und an die Mobilstation (MS) Richtantennen angeschlossen sind, die so zueinander angeordnet sind, daß die Mobilstation (MS) bei einem Weiterreichen (SHO) von einer Funkfeststation (BS') mit diesen beiden für eine Mindestzeitdauer verbunden ist, die zum Ausgleich von verschiedenen Funksignallaufzeiten auf den entsprechenden beiden Funkstrecken (P, P') erforderlich ist.

4. Mobilfunksystem nach Anspruch 1,
dadurch gekennzeichnet, daß die Funkfeststationen (BS, BS') und die Mobilstation (MS) auf veränderbaren Trägerfrequenzen senden und empfangen, um den Sendekanal (DL) und den Empfangskanal (UL) von im Funkspektrum auftretenden Störungen freizuhalten.

5. Mobilfunksystem nach Anspruch 3
dadurch gekennzeichnet, daß die Funkfeststationen (BS, BS') entlang eines Verkehrsweges angeordnet sind, auf dem die Mobilstation (MS) sich bewegt, daß die Richtantennen der Funkfeststation (BS, BS') in die Fahrtrichtung der Mobilstation (MS) ausgerichtet sind und daß die Richtantenne der Mobilstation (MS) entgegen der Fahrtrichtung ausgerichtet ist.

6. Mobilfunksystem nach Anspruch 3,
dadurch gekennzeichnet, daß die Funkfeststationen (BS, BS') mit einer Steuerzentrale (CTR) verbunden ist, die das Weiterreichen (SHO) von der einen zu der nächsten Funkfeststation steuert durch Einschalten der nächsten (BS') und Ausschalten der einen Funkfeststation (BS) derart, daß zwischen dem Einschalten und dem Ausschalten die Mindestzeitdauer verstreicht.

7. Mobilfunksystem nach den Ansprüchen 5 und 6,
dadurch gekennzeichnet, daß die Steuerzentrale (CTR) eine Datenbank (DB) enthält, in der ein Fahrplan für die sich auf dem Verkehrsweg bewegende Mobilstation (MS) gespeichert ist, und daß die Steuerzentrale (CTR) den Fahrplan zum Einschalten der nächsten Funkfeststation (BS') auswertet.

8. Mobilfunksystem nach Anpruch 7,
dadurch gekennzeichnet, daß die Steuerzentrale (CTR) den Fahrplan zur Festlegung einer Reihenfolge ausweitet, die das Ausschalten und das Einschalten der Funkfeststation (BS, BS') festlegt.

9. Funkfeststation (BS) für ein Mobilfunksystem mit weiteren Funkfeststationen (BS') und mit einer Mobilfunkstation (MS), die über eine Funkstrecke (P) mit der Funkfeststation (BS) verbunden ist,
**dadurch gekennzeichnet,** daß an die Funkfeststation (BS) ein Konzentrator (SMX) angeschlossen ist, der im asynchronen Transfermodus arbeitet, um mehrere Teilnehmerkanäle (TCH) durch statistisches Zeitmultiplexen zu einem Sendekanal (DL) zusammenfassen und um einen Empfangskanal (UL) durch statistisches Demultiplexen in die mehreren Teilnehmerkanäle (TCH) aufzuteilen.

10. Mobilstation (MS) für ein Mobilfunksystem mit Funkfeststationen (BS, BS'), mit denen die Mobilstation (MS) jeweils über eine Funkstrecke (P, P') verbindbar ist,
**dadurch gekennzeichnet,** daß an die Mobilstation (MS) ein Konzentrator (SMX) angeschlossen ist, der im asynchronen Transfermodus arbeitet, um mehrere Teilnehmerkanäle (TCH) durch statistisches Zeitmultiplexen zu einem Sendekanal (DL) zusammenzufassen und um einen Empfangskanal (UL) durch statistisches Demultiplexen in die mehreren Teilnehmerkanäle (TCH) aufzuteilen.
